# EUROPEAN PATENT SPECIFICATION

(11) **EP 2 574 775 B1**
(45) Date of publication and mention of the grant of the patent: **04.06.2014**
(21) Application number: 11183132.7
(22) Date of filing: 28.09.2011
(51) Int. Cl.: F03D 7/02, F03D 7/04

(54) **Method of operating a pitch system of a wind turbine considering tower movement and pitch blade bearing lubrication**
Verfahren zum Betreiben eines Pitch-Systems einer Windturbine unter Berücksichtigung der Turmverschiebung und Pitch-Schaufellagerschmiermittel
Procédé pour le fonctionnement d'un système de pas d'une éolienne tenant compte du mouvement de la tour et lubrification du roulement de pale d'éolienne

(43) Date of publication of application: 03.04.2013
(73) Proprietor: Siemens Aktiengesellschaft, 80333 München (DE)
(72) Inventor: Esbensen, Thomas, 7400 Herning (DK); Laurberg, Hans, 8000 Århus C (DK)

(56) References cited:
- EP-A2- 1 942 273
- WO-A1-2008/081232
- WO-A2-2008/065088
- "Guidelines for Design of Wind Turbines", , 1 January 2002 (2002-01-01), pages 9-17, XP55013796, Retrieved from the Internet: URL:http://ns7.freeheberg.com/~mach085/Gui delines_for_Design_of_Wind_Turbines.pdf [retrieved on 2011-12-02]

## Description

The invention is generally directed to a method of operating a pitch system of a wind turbine and to a pitch control system. Particularly, the invention is directed towards optimisation of the maintenance of a pitch system of a wind turbine.

In order to maintain the bearings in the pitch system of a wind turbine, regular pitch activity is required to preserve an oil film inside the pitch blade bearings. At operation below the rated power, the pitch control strategy typically involves applying a constant (or almost constant) pitch angle. Therefore, a maintenance or lubrication strategy for occasionally changing the pitch angles is needed to ensure pitch blade bearing lubrication. An example of a wind turbine including a pitch bearing lubrication system is provided in EP 1 942 273 A2.

According to one example of such a strategy the pitch angle is regularly changed in steps to lubricate the pitch blade bearings. This operation may be active for operation below the constant-power region, i.e. until the power produced by the wind turbine reaches the rated power of the turbine, where pitch control is typically applied.

Wind conditions and turbine control can excite tower vibrations which can increase fatigue and extreme loads on structural components and can endanger the stability of the wind turbine and can lead to losses in the energy production as the wind turbine can not work at the optimal operating point. To counter the vibrations active tower damping can be used. Tower damping is achieved by controlling and setting the pitch of the rotor blades. An example of such active tower damping by setting the pitch of the rotor blades is disclosed in WO 2008/081232 A1.

Sometimes in the fore-aft direction active tower damping is achieved by adding an offset to the pitch reference. If active tower damping is always activated there will always be some pitch activity. In this way, distinct pitch movement for lubrication is probably not necessary, but there will probably be more pitch activity, which is not optimal for the durability of the blade pitch bearings.

It is an object of the invention to improve the maintenance of a pitch system of a wind turbine.

This object is solved according to the invention with the features of claims 1 and 8, respectively.

In one aspect the invention is directed to a method of operating a pitch system of a wind turbine with a tower, where a pitch controller computes a pitch reference signal, i.e. a signal representing a desired pitch angle of the blades, with the following steps:
- activating the creation of an auxiliary pitch signal in dependence on a movement signal representing movement of the tower and on a lubrication signal representing lubrication requirements of the pitch system;
- creating the auxiliary pitch signal based upon the movement signal;
- creating a modified pitch reference signal by adding the auxiliary pitch signal to the pitch reference signal;
- applying the modified pitch reference signal to the pitch system.

The creation of the auxiliary pitch signal will be activated in presence of a power signal representing operation of the wind turbine below its nominal power. At an operation below the nominal or rated power the pitch angle is usually kept constant or almost constant. This may lead to insufficient lubrication of the pitch blade bearings. Therefore, it is beneficial to create and/or activate the auxiliary pitch signal at least in these cases.

In the context of the present invention, the pitch system shall be a system receiving and applying a desired pitch reference, i.e. a modified pitch reference signal in the present invention. The pitch system comprises pitch actuators together with the associated mechanics and a pitch system controller receiving the (modified) pitch reference and translating it into a signal used to manipulate the pitch angles by means of the pitch actuators and the associated mechanics.

The pitch controller that computes the pitch reference signal is typically part of the wind turbine controller that receives measurements and computes not only the pitch reference signal but also, for example, a power/torque reference signal, i.e. a signal representing a desired power or torque at the generator.

The creation of the auxiliary pitch signal encompasses the complete setup of the signal like choosing the hardware or software signal type or protocol, forming the signal waveform i.e. amplitude, frequency, possibly coding and/or de-coding and the shape of the signal i.e. active and inactive parts of the signal. Positive and/or negative signal level can be used. In this case the positive wording in this text encompasses also the negative wording. For example, the term below a threshold (for a positive signal) includes also the meaning above a threshold (for a negative signal). The wording creation can also include only one or some of the above mentioned steps.

The first two steps can also be executed in reverse order or in parallel.

The method introduces a strategy for occasionally changing the pitch angles to ensure pitch blade bearing lubrication. This is achieved by an auxiliary signal which can be applied to the pitch angle reference to change the pitch angles.

An auxiliary signal is provided that can be used for pitch blade bearing lubrication while lowering the loads in a wind turbine, taken into account information about the tower movement. Therefore, the auxiliary pitch signal can also be used to damp tower oscillations actively. Since the efficiency of the wind turbine is a function of the pitch angles of the blades, minimal pitch deviation from an optimal pitch angle is desired since pitch activity acts as a disturbance to the optimal pitch setting (angle). This is another benefit of the auxiliary pitch signal which only introduces the minimum necessary pitch activity. The optimum pitch angle can be defined as the pitch angle which results in the highest power capture, i.e. maximizes the power coefficient of the wind turbine. The auxiliary pitch signal ensures reliable lubrication of the pitch system or the pitch blade bearings, minimizes tower oscillations, and optimizes the power output of the wind turbine.

The creation of the auxiliary pitch signal may be based upon the lubrication signal. It may be sufficient for most applications to create the signal based upon the tower movement signal as the pitch movement according to the tower movement signal ensures lubrication as well. For some applications it may be beneficial to create the auxiliary signal based on the lubrication signal only or on both signals.

The auxiliary pitch signal may be synchronized with the movement signal. The active damping of the tower in the fore-aft direction for example has an improved effect when the two signals are in phase at least for a certain period of time.

The auxiliary pitch signal may comprise a signal waveform with short activations at a low frequency. Activation is seen as an "ON" or active signal part. The term low frequency means frequent activations over time. If the auxiliary pitch signal is frequently applied it may replace active tower damping, which will reduce the overall pitch actuation. It may further effectively damp tower oscillations without introducing extra pitch actuation than required for active tower damping. If the auxiliary pitch signal has large amplitude in order to lubricate the blade pitch bearings sufficiently the auxiliary pitch signal and the tower movement will be coordinated in order not to initiate severe tower oscillations.

The auxiliary pitch signal may comprise a signal waveform with long activations of low amplitude. This waveform has active signal parts of long duration but with small amplitude so that almost no offset is added or subtracted to the optimum pitch angle.

The creation of the auxiliary pitch signal may be activated when the last pitch activation exceeds a defined time span, the average pitch speed is below a defined threshold, and/or the movement signal indicates a movement of the tower that is above a defined limit. In order to maintain the oil film inside the pitch blade bearings the auxiliary signal is applied regularly. The next time to activate the signal or an active part of the auxiliary pitch signal can be determined by e.g. the above mentioned criteria. A single or more criteria can be utilized. The activation may take place when one of more criteria (OR) or all of the used criteria (AND) are fulfilled.

The auxiliary pitch signal may be a function of power, torque, rotational speed of the wind turbine, wind speed, controller state, and/or information or measurements indicative of movement of the tower. These criteria can be used to activate, set up the shape or waveform and/or the amplitude of the auxiliary signal. These additional criteria may increase the effectiveness of the auxiliary pitch signal and the method, respectively.

In a further aspect the invention is directed to a pitch control system for use in a wind turbine with a tower and a pitch system. The pitch control system is connected to a pitch controller generating a pitch reference signal for the pitch system and an auxiliary pitch signal unit which is designed to create an auxiliary pitch signal, an adder for combining the auxiliary pitch signal and the pitch reference signal to a modified pitch reference signal and an output for outputting the modified pitch reference signal to the pitch system. The auxiliary pitch signal unit comprises inputs for a movement signal representing movement of the tower, for a lubrication signal representing lubrication requirements of the pitch system for consideration in the creation of the auxiliary pitch signal and for a power signal representing operation of the wind turbine below its nominal power. The same advantages and modifications as described above apply here as well.

The movement signal may represent, for instance the acceleration, the velocity, or the position of the tower. When the tower frequency (i.e. the frequency which the tower is swaying) is known, it is possible to translate the phase of e.g. an acceleration signal into the phase of the velocity (note that velocity is the time derivative of position, and acceleration is the time derivative of velocity). Typically, the tower acceleration is measured by an accelerometer in the tower top or in the nacelle.

The pitch controller may be part of or integrated in another controller like the wind turbine controller. Likewise, the auxiliary pitch signal unit may be part of or integrated in another controller like the wind turbine controller. In particular, the whole pitch control system, i.e. the pitch controller and the auxiliary pitch signal unit, may be part of or integrated in another control system like the wind turbine controller.

The movement signal may be received from an estimator unit for estimating the movement of the tower. The estimator unit can be operated individually or together with a measurement unit for measuring tower movement. The estimator unit can be part of the pitch control system or another controller or computer. The estimator unit can be realised in software and/or in hardware.

The accompanying drawings are included to provide a further understanding of embodiments. Other embodiments and many of the intended advantages will be readily appreciated as they become better understood by reference to the following detailed description. The elements of the drawings do not necessarily scale to each other. Like reference numbers designate corresponding similar parts.
Fig. 1 illustrates a schematic view of a pitch control system for a wind turbine according to the invention.
Figs. 2 to 8 illustrate signal waveforms of auxiliary pitch signals according to the invention.

In the following detailed description, reference is made to the accompanying drawings which form a part hereof and in which are shown by way of illustration specific embodiments in which the invention may be practised. In this regard, directional terminology, such as "top" or "bottom" etc. is used with reference to the orientation of the Figure(s) being described. Because components of embodiments can be positioned in a number of different orientations, the directional terminology is used for purposes of illustration and is in no way limiting. It is to be understood that other embodiments may be utilized and structural or logical changes may be made without departing from the scope of the present invention. The following detailed description, therefore, is not to be taken in a limiting sense, and the scope of the present invention is defined by the appended claims.

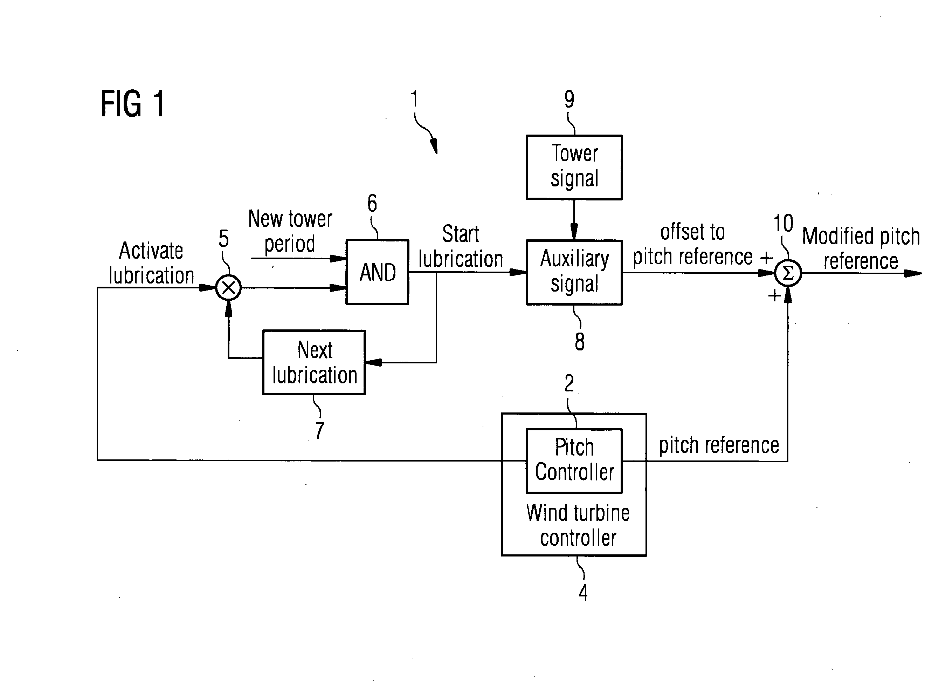

Figure 1 schematically shows an embodiment of an inventive pitch control system 1 for a wind turbine. The wind turbine is equipped with rotor blades (not shown) the pitch angle of which can be changed by a pitch system with one or more actuators together with the respective mechanics in response to a pitch reference signal, which is a modified pitch reference signal in the present case. In addition, the pitch system comprises a pitch system controller that receives the modified pitch reference and translates it into a signal used to manipulate the pitch angles of the rotor blades by means of the pitch actuators and the associated mechanics.

The pitch control system 1 comprises a pitch controller 2 that is, in the present embodiment, part of the wind turbine controller 4. The pitch controller 2 can, however, also be implemented as an individual unit that is not part of the wind turbine controller 4. The pitch control system 1 also comprises an auxiliary pitch signal unit 8 for providing an auxiliary pitch signal that is combined with the pitch reference signal provided by the pitch controller 2 to form the modified pitch reference signal. Although the auxiliary pitch signal unit 8 is shown to be an individual unit it can also be implemented as part or extension of the wind turbine controller 4. The same is true for all other components shown in Figure 1.

The auxiliary pitch signal unit 8 impacts the output of the pitch controller 2 for creating a pitch reference signal which can be used to control the pitch of the blades.

The pitch control system 1 controls the actuation of the blades to ensure maintenance of the pitch blade bearing by guaranteeing sufficient movement of the bearings, to minimize oscillations or movement of the tower, and to optimize the power output of the wind turbine.

The wind turbine controller, or an operator, can decide to send a signal "activate lubrication" in order to start a lubrication sequence. This signal can be an activation signal for activating the pitch control system 1 or part of it. It is also possible that this signal is an internal signal of the wind turbine controller 4 if the pitch control system 1 is fully integrated into the wind turbine controller 4.

The activate lubrication signal is here used as a start signal for the lubrication routine or procedure. An active lubrication signal, that is provided by the wind turbine controller 4 in the present embodiment, is sent to an evaluator 5 which is connected to a first input of an AND gate 6. A second input of the AND gate 6 receives a new tower period signal which shows the status of tower oscillations like a start or end of an oscillation period.

The AND gate 6 outputs a start lubrication signal if both inputs are present. The start lubrication signal is fed back to the evaluator 5 via a next lubrication unit 7. In the next lubrication unit 7 it is decided when a new lubrication procedure is needed for example when the last pitch activation exceeds a defined time span, the average pitch speed is below a defined threshold, and/or a tower movement signal represents a movement of the tower that is above a defined limit. The result of the next lubrication unit 7 is communicated to the evaluator 5 which decides with a routine like a logical AND, OR, XOR or the like if a signal is sent to the AND gate 6.

The signal start lubrication and the process of setting up the signal can be seen as activating the creation of the auxiliary pitch signal. This can be based on a movement signal representing movement of the tower and on a lubrication signal representing lubrication requirements of the pitch system. The lubrication signal can be the activate lubrication signal and/or the signal from the next lubrication unit 7. The lubrication signal may also be the signal from the evaluator 5.

The activation of the auxiliary pitch signal can further be based upon a power signal representing operation of the wind turbine below its nominal power. The power signal can for example fed into AND gate 6.

The start lubrication signal is transmitted to the auxiliary signal unit 8, which creates the auxiliary pitch signal. This creation is based upon the movement or tower signal that represents movement and/or oscillation of the tower. The movement or tower signal is derived from a sensor or measurement unit 9 like, for example, an acceleration sensor in the nacelle or tower and is communicated to an input of the auxiliary signal unit 8.

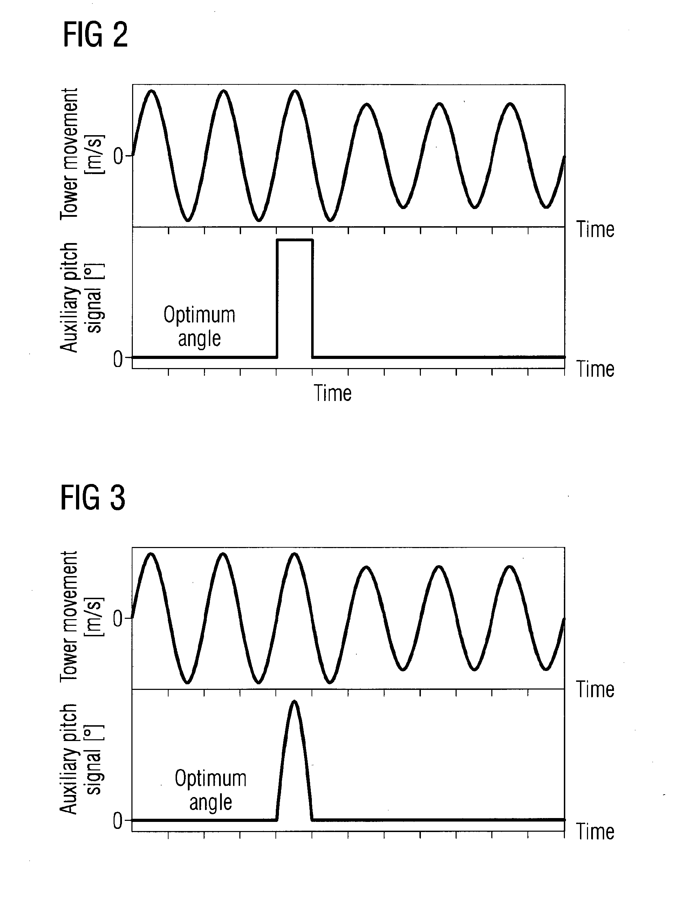

The auxiliary signal unit 8 creates an auxiliary pitch signal that takes into account movement or oscillation of the tower. The creation of the signal may also be based upon the lubrication signal. Different shapes or waveforms of the auxiliary pitch signal are shown in Figure 2 to 8, which are discussed later.

The auxiliary pitch signal may further be a function of power and/or torque and/or rotational speed of the wind turbine and/or wind speed and/or a controller state (of a pitch and/or wind turbine controller) and/or movement of the tower. The signals can be part of the tower signal or can be additional signals that are submitted to the auxiliary signal unit 8.

The auxiliary pitch signal is output to an adder 10, which adds the auxiliary pitch signal and the pitch reference signal to form the modified pitch reference signal. This modified pitch reference signal is then applied to the pitch system.

The pitch control system 1 can consist only of the auxiliary signal unit 8 or of the unit 8 and the further parts shown in Figure 1 like the AND gate 6, the next lubrication unit 7, the evaluator 5, the sensor or measurement unit 9, the adder 10 and/or the pitch generator 2.

In the following, different waveforms of the auxiliary pitch signal are shown in Figures 2 to 8.

The upper diagrams of the Figures show the tower movement or oscillation over time. The frequencies of towers are generally low for example below about 0.5 Hz. The lower diagrams show different shapes of the auxiliary pitch signal as created by the auxiliary signal unit 8.

Figure 2 shows an auxiliary pitch signal with a short active part or activation of low frequency i.e. which is applied seldom. It can be seen that the tower movement experiences damping as the amplitude gets smaller after the auxiliary pitch signal or the active part of the signal is applied.

The active part of the signal is applied periodically with the same or a different shape. The shape of the signal i.e. the form, amplitude and length of the active part or parts can depend on the movement of the tower and/or the lubrication needs of the pitch system. According to these needs the auxiliary pitch signal can change over time.

For comparison, the base line or the inactive part of the signal is shown and marked as optimum angle. The optimum angle does not reflect lubrication needs and/or tower movement.

Figure 3 shows a further signal shape with a spike like active part instead of the rectangular active part of Figure 1. The duration of these two active parts or signals is the same. The damping effect of this signal can also be seen.

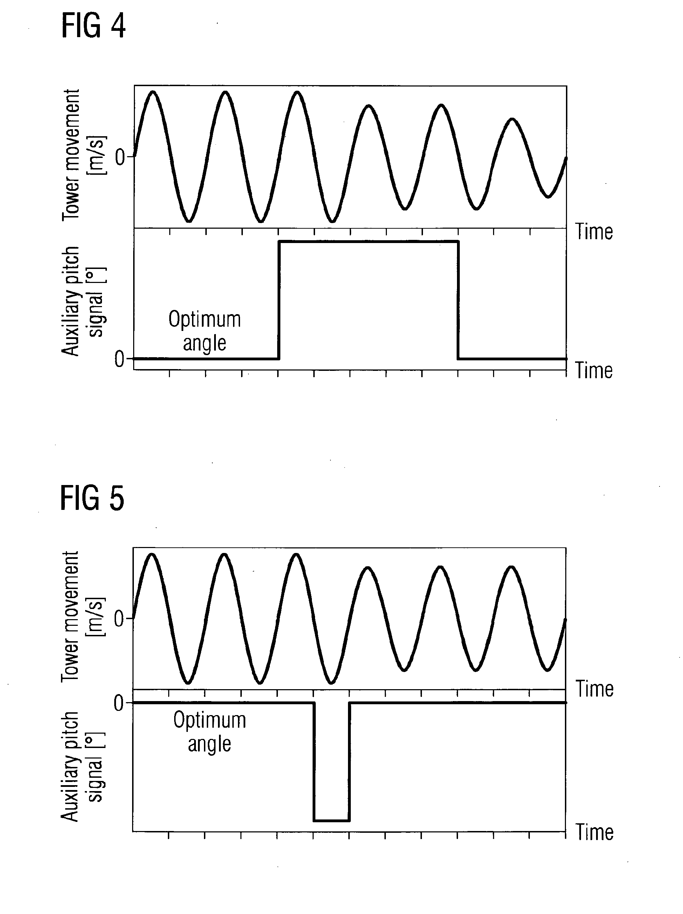

Figure 4 shows an active part with longer duration.

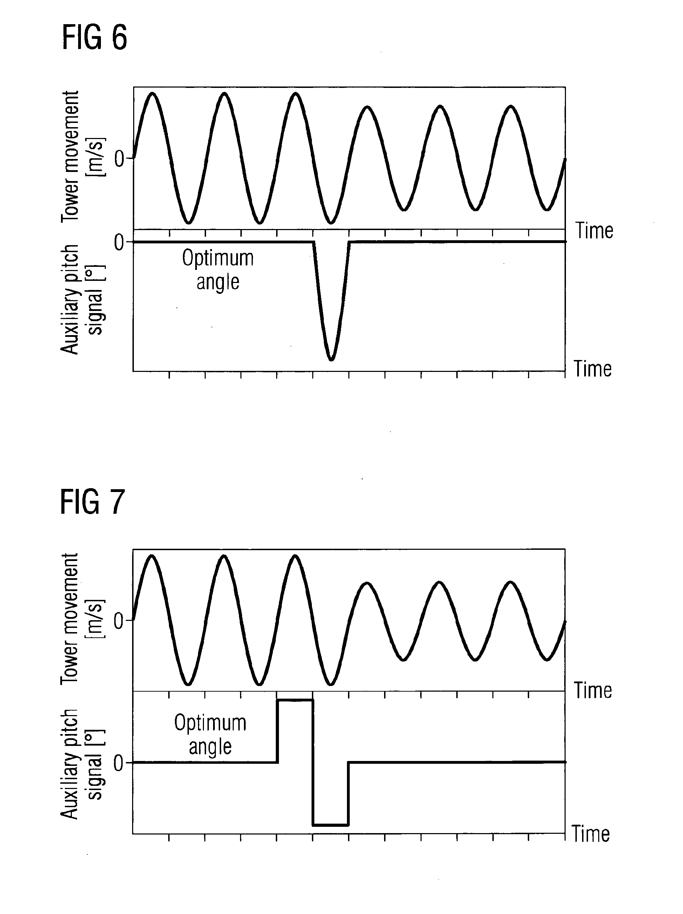

Figures 5 and 6 show negative auxiliary pitch signals. Here, the active parts have a lower amplitude than the inactive parts. Otherwise, the shapes of the signals correspond to the shapes of the signals shown in Figures 2 and 3. The negative signals apply damping to the tower movement as well.

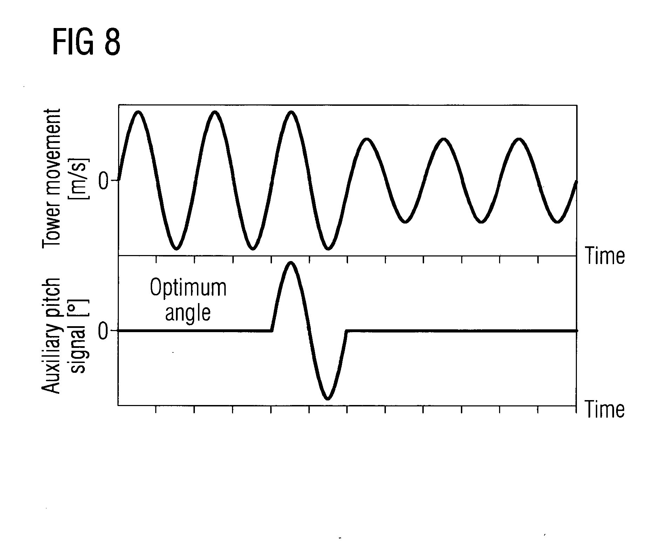

Figures 7 and 8 show mixed signals with positive and negative active parts. It can be seen that these active parts are in phase with the phase of the tower movement and that the tower movement experiences good damping.

## Claims

1. Method of operating a pitch system of a wind turbine with a tower, where a pitch controller (2) computes a pitch reference signal, with the following steps:
- activating the creation of an auxiliary pitch signal in dependence on a movement signal representing movement of the tower;
- creating the auxiliary pitch signal based upon the movement signal;
- creating a modified pitch reference signal by adding the auxiliary pitch signal to the pitch reference signal;
- applying the modified pitch reference signal to the pitch system, **characterised in that**
activation of the creation of the auxiliary pitch signal further depends on a lubrication signal representing lubrication requirements of the pitch system and **in that** the creation of the auxiliary pitch signal is activated in presence of a power signal representing operation of the wind turbine below its nominal power.

2. Method according to claim 1, wherein the creation of the auxiliary pitch signal is based upon the lubrication signal.

3. Method according to at least one of claims 1 or 2, wherein the auxiliary pitch signal is synchronized with the movement signal.

4. Method according to at least one of claims 1 to 3, wherein the auxiliary pitch signal comprises a signal waveform with short activations at a low frequency.

5. Method according to at least one of claims 1 to 3, wherein the auxiliary pitch signal comprises a signal waveform with long activations of low amplitude.

6. Method according to at least one of claims 1 to 5, wherein the creation of the auxiliary pitch signal is activated when the last pitch activation exceeds a defined time span, the average pitch speed is below a defined threshold, and/or the movement signal indicates a movement of the tower that is above a defined limit.

7. Method according to at least one of claims 1 to 6, wherein the auxiliary pitch signal is a function of power, torque, rotational speed of the wind turbine, wind speed, controller state, and/or movement of the tower.

8. Pitch control system (1) for use in a wind turbine with a tower and a pitch system, the pitch control system (1) comprising a pitch controller (2) for generating a pitch reference signal for the pitch system and an auxiliary pitch signal unit (8) which is designed to create an auxiliary pitch signal, an adder (10) for combining the auxiliary pitch signal and the pitch reference signal to a modified pitch reference signal and an output for outputting the modified pitch reference signal to the pitch system, wherein the auxiliary pitch signal unit (8) comprises inputs for a movement signal representing movement of the tower, for a lubrication signal representing lubrication requirements of the pitch system for consideration in the creation of the auxiliary pitch signal and for a power signal representing operation of the wind turbine below its nominal power.

9. Pitch control system (1) according to claim 8, comprising a measurement unit (9) for measuring the movement of the tower.

10. Pitch control system (1) according to claim 8 or 9, comprising an estimator unit (9) for estimating the movement of the tower.

11. Pitch control system (1) according to any of the claims 8 to 10, in which the pitch controller (2) is part of or integrated in another controller.

12. Pitch control system (1) according to any of the claims 8 to 11, in which the auxiliary pitch signal unit (8) is part of or integrated in another controller.

13. Pitch control system (1) according to claim 11 or claim 12, in which is the pitch controller (2) and/or the auxiliary pitch signal unit (8) is/are part of the wind turbine controller.

## Patentansprüche

1. Verfahren zum Betreiben eines Pitch-Systems einer Windenergieanlage mit einem Turm, wobei eine Pitch-Steuerung (2) ein Pitch-Referenzsignal berechnet, mit den folgenden Schritten:
- Aktivieren der Erzeugung eines Hilfs-Pitch-Signals in Abhängigkeit von einem Bewegungssignal, das eine Bewegung des Turms repräsentiert;
- Erzeugen des Hilfs-Pitch-Signals auf der Basis des Bewegungssignals;
- Erzeugen eines modifizierten Pitch-Referenzsignals durch Addieren des Hilfs-Pitch-Signals zu dem Pitch-Referenzsignal;
- Anlegen des modifizierten Pitch-Referenzsignals an das Pitch-System, **dadurch gekennzeichnet, dass**
die Aktivierung der Erzeugung des Hilfs-Pitch-Signals ferner von einem Schmierungssignal abhängt, das Schmierungsanforderungen des Pitch-Systems repräsentiert, und dadurch, dass die Erzeugung des Hilfs-Pitch-Signals bei Vorliegen eines Leistungssignals aktiviert wird, das einen Betrieb der Windenergieanlage unterhalb ihrer Nennleistung repräsentiert.

2. Verfahren nach Anspruch 1, wobei die Erzeugung des Hilfs-Pitch-Signals auf dem Schmierungssignal basiert.

3. Verfahren nach mindestens einem der Ansprüche 1 oder 2, wobei das Hilfs-Pitch-Signal mit dem Bewegungssignal synchronisiert wird.

4. Verfahren nach mindestens einem der Ansprüche 1 bis 3, wobei das Hilfs-Pitch-Signal eine Signalwellenform mit kurzen Aktivierungen mit einer niedrigen Frequenz umfasst.

5. Verfahren nach mindestens einem der Ansprüche 1 bis 3, wobei das Hilfs-Pitch-Signal eine Signalwellenform mit langen Aktivierungen von niedriger Amplitude umfasst.

6. Verfahren nach mindestens einem der Ansprüche 1 bis 5, wobei die Erzeugung des Hilfs-Pitch-Signals aktiviert wird, wenn die letzte Pitch-Aktivierung eine definierte Zeitspanne übersteigt, die mittlere Pitch-Geschwindigkeit unter einem definierten Schwellenwert liegt und/oder das Bewegungssignal eine Bewegung des Turms anzeigt, welche über einem definierten Grenzwert liegt.

7. Verfahren nach mindestens einem der Ansprüche 1 bis 6, wobei das Hilfs-Pitch-Signal eine Funktion von Leistung, Drehmoment, Drehzahl der Windenergieanlage, Windgeschwindigkeit, Steuerungszustand und/oder Bewegung des Turms ist.

8. Pitch-Steuerungssystem (1) zur Verwendung in einer Windenergieanlage mit einem Turm und einem Pitch-System, wobei das Pitch-Steuerungssystem (1) eine Pitch-Steuerung (2) zum Erzeugen eines Pitch-Referenzsignals für das Pitch-System und eine Hilfs-Pitch-Signaleinheit (8), welche dafür ausgelegt ist, ein Hilfs-Pitch-Signal zu erzeugen, einen Addierer (10) zum Kombinieren des Hilfs-Pitch-Signals und des Pitch-Referenzsignals zu einem modifizierten Pitch-Referenzsignal und einen Ausgang zum Ausgeben des modifizierten Pitch-Referenzsignals an das Pitch-System umfasst, wobei die Hilfs-Pitch-Signaleinheit (8) Eingänge für ein Bewegungssignal, das eine Bewegung des Turms repräsentiert, für ein Schmierungssignal, das Schmierungsanforderungen des Pitch-Systems zur Berücksichtigung bei der Erzeugung des Hilfs-Pitch-Signals repräsentiert, und für ein Leistungssignal, das einen Betrieb der Windenergieanlage unterhalb ihrer Nennleistung repräsentiert, umfasst.

9. Pitch-Steuerungssystem (1) nach Anspruch 8, welches eine Maßeinheit (9) zum Messen der Bewegung des Turms umfasst.

10. Pitch-Steuerungssystem (1) nach Anspruch 8 oder 9, welches eine Schätzeinheit (9) zum Schätzen der Bewegung des Turms umfasst.

11. Pitch-Steuerungssystem (1) nach einem der Ansprüche 8 bis 10, wobei die Pitch-Steuerung (2) Teil einer anderen Steuerung oder in eine solche integriert ist.

12. Pitch-Steuerungssystem (1) nach einem der Ansprüche 8 bis 11, wobei die Hilfs-Pitch-Signaleinheit (8) Teil einer anderen Steuerung oder in eine solche integriert ist.

13. Pitch-Steuerungssystem (1) nach Anspruch 11 oder Anspruch 12, wobei die Pitch-Steuerung (2) und/oder die Hilfs-Pitch-Signaleinheit (8) Teil der Windenergieanlagensteuerung sind/ist.

## Revendications

1. Procédé de fonctionnement d'un système de pas d'une éolienne avec une tour, dans lequel un dispositif de commande de pas (2) calcule un signal de référence de pas, comprenant les étapes suivantes :
- activation de la création d'un signal de pas auxiliaire en fonction d'un signal de mouvement représentant le mouvement de la tour ;
- création du signal de pas auxiliaire sur la base du signal de mouvement ;
- création d'un signal de référence de pas modifié en ajoutant le signal de pas auxiliaire au signal de référence de pas ;
- application du signal de référence de pas modifié au système de pas,
**caractérisé en ce que**,
l'activation de la création du signal de pas auxiliaire dépend en outre d'un signal de lubrification représentant des exigences de lubrification du système de pas et **en ce que** la création du signal de pas auxiliaire est activée en présence d'un signal de puissance représentant le fonctionnement de l'éolienne en dessous de sa puissance nominale.

2. Procédé selon la revendication 1, dans lequel la création du signal de pas auxiliaire est basée sur le signal de lubrification.

3. Procédé selon au moins l'une des revendications 1 ou 2, dans lequel le signal de pas auxiliaire est synchronisé avec le signal de mouvement.

4. Procédé selon au moins l'une des revendications 1 à 3, dans lequel le signal de pas auxiliaire comprend une forme d'onde de signal avec des activations courtes à basse fréquence.

5. Procédé selon au moins l'une des revendications 1 à 3, dans lequel le signal de pas auxiliaire comprend une forme d'onde de signal avec des activations longues de faible amplitude.

6. Procédé selon au moins l'une des revendications 1 à 5, dans lequel la création du signal de pas auxiliaire est activée lorsque la dernière activation de pas dépasse une durée définie, la vitesse de pas moyenne est inférieure à un seuil défini, et/ou le signal de mouvement indique un mouvement de la tour qui est supérieur à une limite définie.

7. Procédé selon au moins l'une des revendications 1 à 6, dans lequel le signal de pas auxiliaire est une fonction de puissance, de couple, de vitesse de rotation de l'éolienne, de vitesse du vent, d'état du dispositif de commande et/ou du mouvement de la tour.

8. Système de commande de pas (1) destiné à être utilisé dans une éolienne comportant une tour et un système de pas, le système de commande de pas (1) comprenant un dispositif de commande de pas (2) destiné à générer un signal de référence de pas pour le système de pas et une unité de signal de pas auxiliaire (8) qui est destinée à créer un signal de pas auxiliaire, un additionneur (10) destiné à combiner le signal de pas auxiliaire et le signal de référence de pas pour obtenir un signal de référence de pas modifié et une sortie destinée à sortir le signal de référence de pas modifié dans le système de pas, l'unité de signal de pas auxiliaire (8) comprenant des entrées pour un signal de mouvement représentant le mouvement de la tour, pour un signal de lubrification représentant des exigences de lubrification du système de pas à prendre en compte dans la création du signal de pas auxiliaire et pour un signal de puissance représentant le fonctionnement de l'éolienne en dessous de sa puissance nominale.

9. Système de commande de pas (1) selon la revendication 8, comprenant une unité de mesure (9) destinée à mesurer le mouvement de la tour.

10. Système de commande de pas (1) selon la revendication 8 ou 9, comprenant une unité d'estimation (9) destinée à estimer le mouvement de la tour.

11. Système de commande de pas (1) selon l'une quelconque des revendications 8 à 10, dans lequel le dispositif de commande de pas (2) fait partie d'un autre dispositif de commande ou est intégré dans un autre dispositif de commande.

12. Système de commande de pas (1) selon l'une quelconque des revendications 8 à 11, dans lequel l'unité de signal de pas auxiliaire (8) fait partie d'un autre dispositif de commande ou est intégré dans un autre dispositif de commande.

13. Système de commande de pas (1) selon la revendication 11 ou la revendication 12, dans lequel le dispositif de commande de pas (2) et/ou l'unité de signal de pas auxiliaire (8) fait/font partie du dispositif de commande de l'éolienne.
